# EUROPÄISCHE PATENTSCHRIFT

(11) **EP 1 575 116 B1**
(45) Veröffentlichungstag und Bekanntmachung des Hinweises auf die Patenterteilung: **27.04.2016**
(21) Anmeldenummer: 05002207.8
(22) Anmeldetag: 03.02.2005
(51) Int. Cl.: H01M 8/16, H01M 14/00, H01M 8/18

(54) **Autarke Brennstoffzellenanordnung mit Elektrolyseanordnung**
Autarkic fuel cell system comprising electrolytic cell
Système de piles à combustible autarcique comprenant une cellule d'électrolyse

(30) Priorität: 08.03.2004 DE 102004011554
(43) Veröffentlichungstag der Anmeldung: 14.09.2005
(73) Patentinhaber: Micronas GmbH, 79108 Freiburg i. Br. (DE); Albert-Ludwigs-Universität Freiburg, 79104 Freiburg (DE)
(72) Erfinder: Erdler, Gilbert, 79100 Freiburg (DE); Lehmann, Mirko, 79117 Freiburg (DE); Müller, Claas, 79104 Freiburg (DE)
(74) Vertreter: Koch Müller Patentanwaltsgesellschaft mbH

(56) Entgegenhaltungen:
- EP-A- 1 217 679
- WO-A-2004/051775
- WO-A-2005/008824
- DE-A1- 19 908 532
- US-A1- 2002 106 541
- US-A1- 2003 003 347

## Beschreibung

Die Erfindung bezieht sich auf eine Brennstoffzellenanordnung mit den oberbegrifflichen Merkmalen des Patentanspruchs 1 bzw. ein Verfahren zum Herstellen einer solchen Brennstoffzellenanordnung.

Die elektrische Stromversorgung für elektrisch betriebene Vorrichtungen, Schaltungen und dergleichen wird üblicherweise über externe Energiequellen vorgenommen. Externe Energiequellen sind typischerweise Verbindungen zu einem Stromnetz oder in elektrische Vorrichtungen eingesetzte Batterien oder Akkumulatoren.

Anstelle von Batterien oder Akkumulatoren können auch Brennstoffzellenanordnungen eingesetzt werden. Brennstoffzellen bestehen üblicherweise aus einer ersten und einer zweiten Elektrodenanordnung, von denen eine als Anode und die andere als Kathode dient. Zwischen den beiden Elektrodenanordnungen befindet sich eine Membran-Elektroden-Einheit (MEA) mit katalytischer Eigenschaft, welche als Protonen durchlassende Membran mit katalytischer Beschichtung dient. Weiterhin weist eine derartige Brennstoffzelle eine Brennstoff-Bereitstellungseinrichtung zum Zuführen eines Brennstoffs, typischerweise Wasserstoff, und eine Reaktant-Bereitstellungseinrichtung zum Zuführen eines Reaktants auf. Das Reaktant reagiert zur Stromerzeugung mit Protonen, die aus dem Brennstoff stammen und durch die Membran hindurchgetreten sind.

Aus US 6,312,846 B1 ist eine Brennstoffzelle bekannt, die auf einem Halbleiter-Wafer ausgebildet ist, wobei in den Wafer Kanäle als Leiter für den Brennstoff bzw. das Reaktant und zwischen den Kanälen eine Protonen austauschen lassende Membran ausgebildet ist. Nachteilhaft bei solchen Anordnungen ist, dass zusätzlich ein getrenntes Reservoir für den Brennstoff bereitzustellen ist, welches an den Brennstoff leitenden Kanal angeschlossen ist.

Aus der EP 1 217 679 A1 ist eine Brennstoffzelle bekannt, bei der im Anoden Raum eine Hydrid bildende und/oder Wasserstoff einlagernde Verbindung und im Kathoden Raum eine leicht oxidierbare Verbindung vorgesehen sind. Dies führt dazu, dass während des Normalbetriebs der Brennstoffzelle eine elektrochemische Aufladung erfolgt, so dass die elektrochemische Kapazität in Form eines Batteriebetriebs der Brennstoffzelle zur Energieversorgung verwendet werden kann. Des Weiteren ist aus der US 2002 / 106541 A1 eine Brennstoffzellenanordnung mit einer Elektrolyseeinheit bekannt. Aus der US 2003 / 0003347 A1 ist eine Brennstoffzelle mit einer Brennstoffbereitstellungseinrichtung bekannt, welche wenigstens teilweise auf mit einer integrierten Schaltung integrierbar ist.

Die Verwendung eines Wasserstoff speichernden Materials, das in Kontakt zur Anode steht, ist ebenfalls aus der DE 199 08 532 A1 bekannt. Darüber hinaus ist dieser Druckschrift eine Brennstoffzelle zu entnehmen, welche durch Beleuchtung wieder aufgeladen werden kann.

Aus der nachveröffentlichten PCT-Anmeldung WO 2004/051775 ist eine Brennstoffzellenanordnung zur Versorgung einer integrierten Schaltung bekannt, bei der eine Palladium-Schicht, die auf einem Halbleitermaterial ausgebildet ist, einerseits als Anode der Brennstoffzelle dient und andererseits Wasserstoff speichert,

Aus US 6,326,097 B1 ist eine Anordnung bekannt, welche zum Nachladen der Akkumulatoren von beispielsweise einem Mobilfunkgerät ausgebildet ist. Im wesentlichen besteht diese Anordnung aus einer Halterung mit einem elektrischen Anschluss für das mit Strom zu versorgende Gerät, einer Brennstoffzellenanordnung zum Erzeugen des bereitzustellenden Stroms sowie einer Brennstoff-Bereitstellungseinrichtung zum Zuführen des Brennstoffs zu der Brennstoffzellenanordnung. Die Brennstoff-Bereitstellungseinrichtung besteht dabei aus einer Aufnahme für Wasserstoff-Speicherkartuschen, welche nach dem Verbrauch des Brennstoffs ausgetauscht werden können. Derartige Anordnungen sind baulich aufwendig und sinnvoll für die Erzeugung einer größeren Strommenge, wie sie beispielsweise für Mobilfunkgeräte benötigt wird.

Allgemein bekannt sind auch Brennstoffzellenanordnungen, die eine Brennstoffzelle und eine Brennstoff-Zuführungseinrichtung aufweisen, wobei die Brennstoff-Zuführungseinrichtung zum Zuführen des Brennstoffs mit einer Brennstoff-Bereitstellungseinrichtung in der Brennstoffzelle verbunden ist.

Das Wasserstoffgas wird durch seinen sehr hohen Energiegehalt und seine völlig rückstandslose Verbrennung zu Wasser als der optimale Energieträger angesehen. Neben der Herstellung aus fossilen Brennstoffen und neben der Elektrolyse aus Wasser, was umweltfreundlich unter Verwendung der Energie aus Solarzellen geschehen kann, wird zunehmend die biologische Wasserstoffgewinnung diskutiert. Viele Algen und Bakterien besitzen nämlich die Fähigkeit, unter bestimmten Bedingungen molekularen Wasserstoff zu produzieren. Die dazu notwendige Energie wird, wie bei Solarzellen, direkt aus dem Sonnenlicht übernommen, hier durch die Photosynthese dieser Organismen.

Die Aufgabe der Erfindung besteht darin, eine Brennstoffzellenanordnung mit Blick auf eine baulich einfache Struktur und die Möglichkeit der Miniaturisierung zu verbessern.

Diese Aufgabe wird durch die Brennstoffzellenanordnung mit den Merkmalen des Patentanspruchs 1 bzw. durch ein Verfahren zum Herstellen einer solchen Brennstoffzellenanordnung mit den Merkmalen des Patentanspruchs 19 gelöst.

Die Brennstoffzellenanordnung, weist eine Brennstoffzelle und eine Brennstoff-Zuführungseinrichtung auf . Die Brennstoffzelle ist ausgestattet mit einer ersten Elektrode und einer zweiten Elektrode, von denen eine als Kathode und die andere als Anode ausgebildet ist, einer zumindest Protonen durchlassenden Schicht mit katalytischer Wirkung oder zusätzlich einem katalytischen Material im Bereich zwischen der ersten Elektrode und der zweiten Elektrode, einer Brennstoff-Bereitstellungseinrichtung zum Zuführen eines Brennstoffs, und einer Reaktant-Bereitstellungseinrichtung zum Zuführen eines Reaktants, welches zur Stromerzeugung mit Protonen aus dem Brennstoff reagiert, wobei Brennstoff-Bereitstellungseinrichtung und Reaktant-Bereitstellungseinrichtung auf der Seite der ersten Elektrode bzw. der Seite der zweiten Elektrode angeordnet sind. Die Brennstoff-Zuführungseinrichtung ist zum Zuführen des Brennstoffs mit der Brennstoff-Bereitstellungseinrichtung verbunden. Die Brennstoffzellenanordnung wird dadurch charakterisiert , dass die Brennstoff-Bereitstellungseinrichtung als eine der Elektroden ausgebildet ist oder die Brennstoff-Bereitstellungseinrichtung als eine einer der Elektroden benachbarte Schicht ausgebildet ist und dass die Brennstoff-Bereitstellungseinrichtung als Speichereinrichtung für den Brennstoff ausgebildet ist. Wird die Brennstoff-Bereitstellungseinrichtung als Wasserstoffspeicher aus Palladium ausgebildet, so wird zwischen Membran und Palladium kein Platin als Katalysator benötigt, was zu einer Kostenersparnis führt.

Eine solche Brennstoffzellenanordnung ist kompakt aufgebaut und ermöglicht eine Miniaturisierung zu einer Kleinstenergie-Bereitstellungseinrichtung zum Bereitstellen einer begrenzten Strommenge für eine integrierte Schaltungsanordnung oder sonstige Zwecke mit geringem Strombedarf. Die erzeugbare Strommenge ist durch die Menge an Brennstoff bestimmt, welche in der Brennstoff-Bereitstellungseinrichtung gespeichert ist. Durch die Brennstoffzellenanordnung bzw. das Verfahren werden handelsübliche Pufferbatterien, Akkus oder z.B. "Goldcap"-Kondensatoren ersetzt. Durch die Ankopplung einer Brennstoff-Zuführungseinrichtung kann die Brennstoff-Bereitstellungseinrichtung wieder mit Brennstoff nachgefüllt werden. Besonders vorteilhaft ist der Einsatz in Schaltungen, welche nur kurzzeitig über eine begrenzte Strommenge verfügen müssen, beispielsweise bei einem momentanen Ausfall einer Haupt-Stromversorgung durch eine externe Stromversorgungseinrichtung. Derartige Brennstoffzellenanordnungen ermöglichen eine nachfolgende Regenerierung des Brennstoffspeichers bzw. der Brennstoff-Bereitstellungseinrichtung durch erneutes Zuführen von Brennstoff.

Vorteilhafte Ausgestaltungen sind Gegenstand abhängiger Ansprüche.

Erfindungsgemäß ist eine Brennstoffzellenanordnung, bei der die Brennstoff-Zuführungseinrichtung und die Brennstoff-Bereitstellungseinrichtung zueinander benachbart angeordnet sind und eine Elektrolysezelle ausbilden. Eine solche Anordnung ermöglicht einen platzsparenden und kompakten Aufbau. Besonders kompakt und einfach aufgebaut ist eine Brennstoffzellenanordnung, bei der die Brennstoff-Bereitstellungseinrichtung sowohl einerseits als eine der Elektroden der Brennstoffzelle ausgebildet ist oder zu einer der Elektroden der Brennstoffzelle direkt benachbart angeordnet ist als auch andererseits als eine Elektrode einer durch die Brennstoff-Zuführungseinrichtung ausgebildeten Elektrolysezelle ausgebildet ist oder zu einer Elektrode durch die Brennstoff-Zuführungseinrichtung ausgebildeten Elektrolysezelle direkt benachbart angeordnet ist. Bei einer solchen Anordnung übernimmt die Brennstoff-Bereitstellungseinrichtung eine Doppelfunktion als Speicher zum Bereitstellen des Brennstoffs für die Brennstoffzelle in unmittelbarer Nachbarschaft der Brennstoffzelle und außerdem als Speicher zum Speichern von der Elektrolysezelle erzeugtem Brennstoff in ebenfalls unmittelbarer Nachbarschaft zur Speichereinrichtung. In besonders kompakter Form wird die Brennstoff-Bereitstellungseinrichtung dabei als Elektrode der Brennstoffzelle und/oder als Elektrode der Elektrolysezelle ausgebildet.

Besonders bevorzugt wird eine Brennstoffzellenanordnung mit integrierten Speichereinrichtungen für ein Verbrennungsendprodukt, den Brennstoff und das Reaktant als geschlossenes System. In einer solchen Brennstoffzellenanordnung werden somit alle für die Stromerzeugung erforderlichen Betriebsmittel, d. h. der Brennstoff, insbesondere Wasserstoff, als auch das Reaktant, insbesondere Sauerstoff, in ausreichender Menge für einen autarken Betrieb bereitgestellt. Vorteilhafterweise wird zusätzlich eine Speichereinrichtung für ein Verbrennungsendprodukt, insbesondere Wasser, ausgebildet, so dass auch die Entsorgung des Verbrennungsendprodukts im Fall des Einbaus in einer gegenüber freiem Wasser empfindlichen Schaltungsanordnung oder dergleichen unkritisch ist. Im Fall der Ausbildung der Brennstoff-Zuführungseinrichtung als eine Elektrolyseeinheit kann die Speichereinrichtung mit dem Verbrennungsendprodukt zugleich als Zuführungseinrichtung des Elektrolysestartproduktes für den Elektrolysevorgang verwendet werden. Eine solche Anordnung ist besonders vorteilhaft, wenn bei der Brennstoffzellenanordnung die Speichereinrichtungen für das Reaktant und das Verbrennungsendprodukt zum Austausch und Durchleiten des Reaktants und des Verbrennungsendprodukts als gemeinsames Behältnis miteinander verbunden sind. Vorteilhaft bei dieser Ausführungsform ist insbesondere eine Brennstoffzellenanordnung, bei der die Speichereinrichtung für das Reaktant der einen der Elektroden der Brennstoffzelle benachbart angeordnet ist und die Speichereinrichtung für das Verbrennungsendprodukt einer Elektrode einer Elektrolyseeinheit benachbart angeordnet ist. Bevorzugt wird eine Brennstoffzellenanordnung, bei der die Speichereinrichtung für das Reaktant ein hydrophobes Material aufweist und/oder die Speichereinrichtung für das Verbrennungsendprodukt ein hydrophiles Material aufweist. Die Anordnung dieser Materialien in den beiden Speichereinrichtungen bewirkt, dass in der Elektrolyseeinheit erzeugtes Reaktant beschleunigt in den Bereich der Brennstoffzelle abtransportiert wird und dass andererseits bei der Brennstoffzelle im Rahmen der Verbrennung erzeugtes Verbrennungsendprodukt beschleunigt in den Bereich der Elektrolyseeinheit abtransportiert wird.

Bevorzugt wird eine Brennstoffzellenanordnung, bei der die Speichereinrichtung für den Brennstoff zwischen der Protonen durchlassenden Schicht der Brennstoffzelle und einer Elektrolytschicht einer Elektrolyseeinheit angeordnet ist und die beiden anderen Speichereinrichtungen die Brennstoffzelle und die Elektrolyseeinheit umgeben. Vorteilhaft ist auch die umgekehrte räumlich Aufteilung bei einer Brennstoffzellenanordnung, bei der die Speichereinrichtungen für das Reaktant und das Verbrennungsendprodukt zwischen der Protonen durchlassenden Schicht der Brennstoffzelle und einer Elektrolytschicht einer Elektrolyseeinheit angeordnet sind und die andere Speichereinrichtung die Brennstoffzelle und die Elektrolyseeinheit umgibt. Vorteilhaft ist dabei eine Brennstoffzellenanordnung, wobei die Brennstoffzellenanordnung im wesentlichen zylindersymmetrisch aufgebaut ist. Ein solcher Aufbau ermöglicht eine platzsparende Anordnung der einzelnen Komponenten und somit eine Miniaturisierung der gesamten Brennstoffzellenanordnung. Dies ermöglicht einen hermetisch dichten Aufbau, bei dem Produkte und Edukte im geschlossenen Kreislauf laufen.

Gemäß einer weiteren Ausführungsform ist besonders vorteilhaft eine Brennstoffzellenanordnung mit einer Schaltung zum wahlweisen elektrochemischen Entladen oder Aufladen der Brennstoff-Bereitstellungseinrichtung. Die Brennstoff-Zuführungseinrichtung wird durch umgekehrtes Beschalten der Brennstoffzelle als Kathode geschaltet, wozu die Schaltung zum Aufladen der Brennstoff-Bereitstellungseinrichtung entsprechend ausgebildet wird. Die Brennstoff-Bereitstellungseinrichtung oder eine dieser benachbarte der Elektroden wird entsprechend als Kathode geschaltet. Die Baugruppe aus Elektrode, Membran bzw. Protonen durchlassender Schicht und weiterer Elektrode wird mit der Schaltung bei einer solchen Anordnung sowohl als Brennstoffzelle als auch als Elektrolysezelle beschaltbar. Nach dem Verbrauch von Brennstoff kann somit aus dem Verbrennungsendprodukt durch Hinzuführen von Strom einer externen Stromquelle eine Regenerierung des Brennstoffvorrats vorgenommen werden, wobei das gesamte System vorteilhafterweise durch die Ausbildung entsprechender Speichereinrichtungen für Brennstoff, Reaktant und Verbrennungsendprodukt als autarkes System ausgebildet wird.

Erfindungsgemäß ist eine Brennstoffzellenanordnung, bei der die Brennstoff-Bereitstellungseinrichtung als eine der Elektroden oder eine einer der Elektroden direkt benachbarte Schicht auf einer Halbleiterschicht aufgebracht ist. Die Halbleiterschicht ermöglicht die Integration in einer Halbleiteranordnung, wobei auf der anderen Seite der Halbleiterschicht oder in einem Nachbarbereich eine integrierte Schaltungsanordnung ausgebildet sein kann, welche mit dem Strom der Brennstoffzelle versorgt wird oder eine aktive Schaltung der Brennstoffzellenanordnung durchführt. Eine solche Anordnung bietet sich insbesondere an, wenn die Brennstoff-Zuführungsanordnung seitlich der Brennstoff-Bereitstellungseinrichtung platzierbar ist oder der Brennstoff über Kanäle in der Halbleiterschicht oder in einer darüber angeordneten Schicht zugeführt wird.

Vorteilhaft ist eine Brennstoffzellenanordnung, bei der die Brennstoff-Zuführungseinrichtung eine Elektrolyseeinheit einer Elektrolysezelle zum Erzeugen des Brennstoffs aufweist. Vorteilhaft ist eine Brennstoffzellenanordnung, bei der die Brennstoff-Bereitstellungseinrichtung aus einem kontaktierten Material besteht, welches mit dem Brennstoff beaufschlagt ist.

Vorteilhaft ist eine Brennstoffzellenanordnung, bei der die Brennstoff-Bereitstellungseinrichtung Palladium aufweist und als Palladium-Speicher, insbesondere als Palladiumhydridspeicher, ausgebildet ist.

Vorteilhaft ist eine Brennstoffzellenanordnung, bei der die Brennstoff-Bereitstellungseinrichtung zum autonomen Betreiben einer integrierten Schaltung dimensioniert ist, beispielsweise eine Größe von 10 cm x 10 cm x 2 cm oder besonders bevorzugt 1 cm x 1cm x 0,2 cm aufweist.

Vorteilhaft ist eine Brennstoffzellenanordnung, bei der die Brennstoff-Zuführungseinrichtung ein Depot mit Algen oder Bakterien zum Erzeugen des Brennstoffs aufweist. Das Depot kann in der Nähe der Brennstoff-Bereitstellungseinrichtung, insbesondere einem Palladiumspeicher angeordnet sein. Bei Einstrahlung von Sonnenlicht wird dann Wasserstoff produziert, der dann in das Palladium hinein diffundiert und im Palladium gespeichert wird. Vorteilhaft ist dabei, dass dies auch während des Betriebs der Brennstoffzelle funktioniert. Insbesondere muss keine Elektrolysespannung angelegt werden, da der Wasserstoff von den Mikroorganismen erzeugt wird. Biobrennstoffzellen haben den Vorteil, sehr klein zu sein und außerdem auch bei Raumtemperatur zu funktionieren.

Möglich ist auch die Sauerstoffseite mit Mikroorganismen, z.B. Zellen, Algen oder Bakterien, zu versehen, die Sauerstoff z.B. photosynthetisch produzieren. Der Sauerstoff wird dann für die Brennstoffzellenreaktion benutzt.

Vorteilhaft ist eine Kleinstenergie-Bereitstellüngseinrichtung mit einer solchen Brennstoffzellenanordnung zum Bereitstellen geringer Strommengen mit einer gering begrenzten Menge des Brennstoffs. Vorteilhafterweise ist diese Menge des Brennstoffs autark nachfüllbar. Vorteilhaft ist eine elektrische Schaltung mit einer Brennstoffzellenanordnung zum autarken Versorgen der elektrischen Schaltung mit Strom.

Vorteilhaft ist auch eine integrierte Schaltungsanordnung (IC) mit einer Seite, insbesondere einer fertigprozessierten Vorderseite der IC-Fläche und einer solchen Brennstoffzellenanordnung zur Energieversorgung der integrierten Schaltungsanordnung, wobei die Brennstoff-Bereitstellungseinrichtung Palladium aufweist und als Palladium-Speicher, insbesondere als Palladiumhydridspeicher auf dieser Seite oder dieser fertigprozessierten Seite der IC-Fläche aufgebracht ist. Dies reduziert den Platzbedarf eines solchen IC.

Vorteilhaft ist auch eine Ausführungsform, bei der entsprechend die Sauerstoffseite als Speicher ausgebildet ist, z.B. als Speicher für sauerstoffgesättigte Flüssigkeit oder Polymer. Natürlich kann entsprechend auch auf der Sauerstoffseite der Anordnung eine Elektrolysezelle angebracht werden, welche Sauerstoff erzeugt.

Vorteilhaft ist ein Verfahren zum Herstellen einer solchen Brennstoffzellenanordnung, bei dem die Brennstoffzelle und die Brennstoff-Zuführungseinrichtung mit einem integrierten Palladiumspeicher hergestellt werden.

Ausführungsbeispiele der Erfindung werden nachfolgend anhand der Zeichnung näher veranschaulicht. Es zeigen:
- Fig. 1A: schematisch einen Schnitt durch eine besonders bevorzugte Brennstoffzellenanordnung zur Veranschaulichung des Grundprinzips;
- Fig. 1B: schematisch einen Schnitt durch eine alternative Brennstoffzellenanordnung gemäß dem Grundprinzip;

- Fig. 2A, 2B: eine alternative Ausführungsform, bei der eine Schichtanordnung wahlweise als Brennstoffzelle oder als Elektrolysezelle beschaltbar ist;
- Fig. 3: ein weiteres Ausführungsbeispiel mit einer Brennstoffzellenanordnung, welche neben einer Brennstoffzelle und einer Elektrolyseeinrichtung auch Speichereinrichtungen für Brennstoff, Reaktant und Verbrennungsendprodukt aufweist; und
- Fig. 4: eine weitere Ausführungsform des Ausführungsbeispiels gemäß Fig. 3

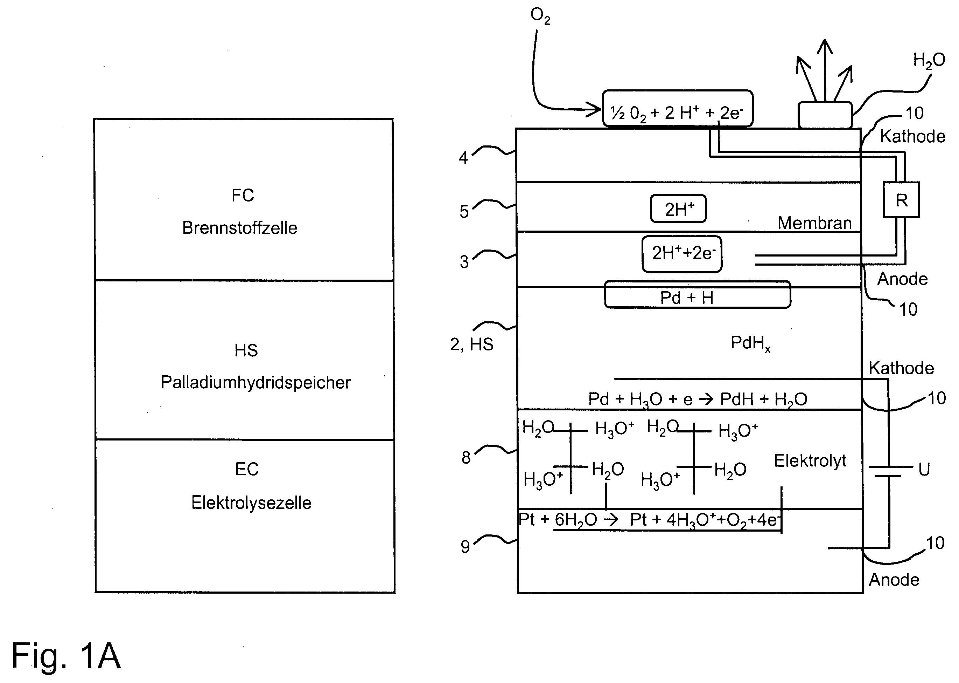

Das Grundprinzip einer bevorzugten Brennstoffzellenanordnung ist auf der linken Seite von Fig. 1A skizziert. Um eine Miniaturisierung und einen einfachen Aufbau bei zugleich universellem Einsatz zu ermöglichen, besteht die Brennstoffzellenanordnung aus im wesentlichen drei Komponenten. Dies sind die eigentliche Brennstoffzelle FC, ein Brennstoffspeicher HS als eine Brennstoff-Bereitstellungseinrichtung HS und eine Elektrolysezelle EC. Gemäß der besonders bevorzugten Ausführungsform wird die Brennstoff-Bereitstellungseinrichtung HS durch den Einsatz von Palladium Pd ausgebildet und dient als Palladium-Speicher bzw. Palladium-Hydrid-Speicher zum Zwischenspeichern von Wasserstoff als Brennstoff für die Brennstoffzelle FC.

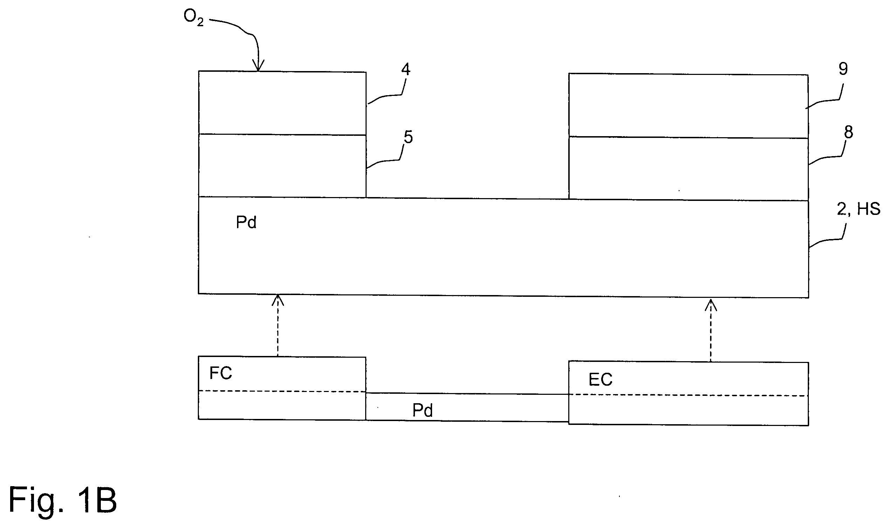

Fig. 1B zeigt eine Anordnung, bei der eine Brennstoffzelle FC und eine Elektrolysezelle EC nebeneinander angeordnet sind und sich einen gemeinsamen Palladiumspeicher 2,HS mit Palladium Pd teilen. Der Palladiumspeicher 2 erstreckt sich an der Unterseite unter der Brennstoffzelle FC und unter der Elektrolysezelle EC und erstreckt sich seitlich zwischen diesen als ein diese verbindendes Element. Während der Elektrolyse gebildeter Wasserstoff verteilt sich über Diffusion im Palladium Pd.

Wie aus Fig. 1A und entsprechend Fig. 1B ersichtlich, besteht eine Brennstoffzelle im wesentlichen aus einer ersten Elektrode 3 und einer zweiten Elektrode 4 bzw. entsprechenden Elektrodenanordnungen. Die beiden Elektroden 3, 4 sind zumindest durch eine Protonen H durchlassende Schicht 5 in Form vorzugsweise einer katalytischen Membran ausgebildet. Die Elektroden 3, 4 sind als Anode bzw. Kathode ausgebildet und weisen elektrische Anschlüsse 10 auf. Beim dargestellten Ausführungsbeispiel ist die erste Elektrode 3 direkt auf einem Träger 2 angeordnet, so dass auch eine direkte Verbindung zu einem entsprechend leitfähigen Bereich des Trägers 2 erfolgen kann.

Wie für Brennstoffzellen üblich, tritt von der Seite der ersten Elektrode 3 aus Brennstoff heran, welcher vorzugsweise aus Wasserstoff besteht. Der Brennstoff reagiert mit der katalytischen Schicht 5 oder entsprechenden Elementen in dem Material der ersten Elektrode 3 derart, dass Wasserstoffionen, dass heißt Protonen, freigegeben werden. Diese Protonen treten durch die Protonen leitfähige Schicht 5 in Richtung der zweiten Elektrode 4 hindurch. Im Bereich der zweiten Elektrode 4 reagieren die Protonen mit einem in diesen Bereich herangeführten Reaktant, vorzugsweise Sauerstoff O₂. Über die elektrischen Leiter 10 entsteht bei zwischen diesen geschlossenem Stromkreis ein entsprechender Stromfluss.

Wie aus Fig. 1A ersichtlich, kann das Reaktant O₂ von der Umgebung aus direkt an die frei zugängliche zweite Elektrode 4 gelangen, so dass mit Blick auf das Reaktant ein Betrieb in jedem Raum mit sauerstoffhaltiger Luft möglich ist. Bei der dargestellten Ausführungsform besteht die zweite Elektrode 4 aus einer Diffusionsschicht, die den Ein- und Durchtritt des Reaktants O₂ ermöglicht.

Die Brennstoff-Bereitstellungseinrichtung HS besteht vorteilhafterweise direkt aus der ersten Elektrode 3 und/oder wie dargestellt aus einer dieser benachbarten weiteren Schicht HS selber. Diese erste Elektrode 3 bzw. die weitere Schicht enthält Brennstoff, dass heißt vorzugsweise Wasserstoff. Bei Bedarf wird dieser Brennstoff aus dem Material der ersten Elektrode 3 bzw. weiteren Schicht abgegeben, wie das ansonsten vergleichbar aus entsprechenden Brennstoff-Zufuhrkanälen von Brennstoffzellen gemäß dem Stand der Technik bekannt ist.

Zwar erscheint auf den ersten Blick eine derartige Anordnung nachteilhaft, da nur eine begrenzte Menge Brennstoff zur Verfügung steht, jedoch überwiegt bei insbesondere Vorrichtungen mit einem nur sehr geringen und möglicherweise nur einmaligen bzw. getakteten Strombedarf der bauliche Vorteil durch die geringe Dimensionierbarkeit, da keine zusätzlichen Brennstoff-Zufuhrkanäle und separaten Brennstoff-Reservoirs erforderlich sind.

Besonders einfach ist die Herstellung einer solchen Brennstoffzelle FC mit der Brennstoff-Bereitstellungseinrichtung HS integriert in ein Halbleiter-Herstellungsverfahren, beispielsweise in einen CMOS-Prozess (CMOS: Complementary symmetry Metal-Oxide Semiconductor transistor / Complementär-Feldeffekttransistor mit Metall-Oxide-Halbleiter-Aufbau). Dabei wird bei der Herstellung der Schicht zur Ausbildung der ersten Elektrode 3 oder der weiteren dazu benachbarten Schicht ein mit dem Brennstoff beaufschlagtes Material auf eine Trägerschicht aufgebracht. Besonders vorteilhaft ist die Kombination von kontaktiertem Palladium (Pd), welches während oder nach dem Abscheidungsprozess mit Wasserstoff beaufschlagt wird. Danach werden die Membran bzw. die Protonen durchlassende Schicht 5 und weitere für eine Brennstoffzelle FC notwendige Materialien und Schichten aufgebracht.

Beispielsweise kann eine erste Elektrode 3 aus einer Palladium-Schicht mit einer Fläche von 1 mm² mit einer Mächtigkeit von 1 µm während des Herstellungsprozesses mit Wasserstoff gesättigt werden. Bevorzugtes Ziel bei einer solchen Anordnung ist es, mit diesem Wasserstoff auszukommen, also nicht irgendwelche zusätzliche Zufuhreinrichtungen für Wasserstoff oder entsprechende Energieträger vorzusehen. Die Sauerstoffzufuhr erfolgt vorteilhafterweise über die Umgebungsluft. Durch ein einmaliges Beaufschlagen von Wasserstoff können vorzugsweise getaktete Halbleiterschaltungen auf diese Art und Weise mit dieser chip-integrierten Stromquelle versorgt werden, um beispielsweise ein autarkes Mikrosystem, wie z.B. eine Alarmanlage oder ein intelligentes Pflaster auszubilden.

Durch ein einmaliges Beaufschlagen von Wasserstoff kann bei dem beschriebenen Beispiel gemäß ersten Berechnungen und je nach Diffusionsbedingungen des Wasserstoffs ein zehn Sekunden andauernder Stromfluss mit einer Stromstärke in der Größenordnung von 1 µA erzeugt werden. Einfache Halbleiterschaltungen bzw. Chip können auf diese Art und Weise mit einer integrierten Stromquelle versehen werden, um beispielsweise eine Alarmanlage auszubilden.

Der Träger 2 besteht in besonders bevorzugter Ausführungsform oberseitig, dass heißt der Brennstoffzelle 1 zugewandt, aus einem Polysilizium 6 mit entsprechender Strukturierung bzw. Ausbildung entsprechend dotierter Bereiche. Das Polysilizium 6 bildet eine Übergangsschicht zu einer darunter angeordneten integrierten Schaltung 7 (IC), welche mit Strom aus der Brennstoffzelle 1 zu versorgen ist. Unter dem Polysilizium wiederum ist besonders bevorzugt ein Nitrid als Diffusionssperre für den Wasserstoff angeordnet. Insbesondere kann aus Platzgründen das Palladium auch auf die Rückseite oder fertigprozessierte Vorderseite der IC-Fläche aufgebracht werden.

Insbesondere bei dem Beispiel einer Alarmanlage, welche im I-dealfall selten oder gar nicht zu aktivieren ist, ist die Nachfüllbarkeit der Brennstoff-Bereitstellungseinrichtung HS mit neuem Brennstoff vorteilhaft. Um eine baulich aufwändige Anordnung bekannter Art vermeiden zu können, weist die bevorzugte Ausführungsform eine integrierte Elektrolysezelle EC auf. Im Fall des Nachfüllens des Brennstoffs bei einer Alarmanlage reicht dabei vorteilhafterweise eine sehr gering dimensionierte Elektrolysezelle EC aus, die beispielsweise über eine Fotozelle als Spannungsquelle U betrieben wird. Als Ausgangsprodukt für den Elektrolysevorgang dient vorzugsweise Wasser aus der Umgebungsluft. Bei einem Einsatz im Freien kann beispielsweise auch Kondenswasser von morgendlichem Tau als Ausgangprodukt für den Elektrolysevorgang verwendet werden, um das derart bereitgestellte Wasser H₂O nach dem Sonnenaufgang mit Hilfe von Strom aus der Fotozelle zu Sauerstoff O₂ und Wasserstoff aufzuspalten. Der Sauerstoff wird direkt freigesetzt. Der Wasserstoff wird als Brennstoff der Brennstoff-Bereitstellungseinrichtung HS zugeführt.

Bei der dargestellten Anordnung besteht die eigentliche Elektrolysezelle EC aus zwei Elektroden 2, HS bzw. 9 mit Anschlüssen 10 zu der Spannungsquelle U. Zwischen den Elektroden 2, 9 ist die eigentliche Elektrolyseeinheit 8 in für sich bekannter Art und Weise zwischengeschaltet. Vorteilhafterweise dient die als Kathode dienende Elektrode 2 zugleich als Brennstoffspeicher bzw. die Brennstoff-Bereitstellungseinrichtung HS. Die Brennstoff-Bereitstellungseinrichtung HS dient bei dem dargestellten Aufbau somit im Fall einer besonders kompakten Ausführungsform sowohl als eine als Anode geschaltete Elektrode 3 der Brennstoffzelle FC als auch als eine als Kathode geschaltete Elektrode 2 der Elektrolysezelle EC.

Wie dargestellt, wird durch die als Anode ausgebildete Elektrode 9 der Elektrolysezelle EC (Wasserelektrolyse)unter Zuhilfenahme von Platin Pt und jeweils sechs Wassermolekülen H₂O eine Elektrolyse von Wasser unter Erzeugung von vier Molekülen H₃O⁺ und freiem Sauerstoff O₂ durchgeführt. Bei der Elektrolyse steht auf der anderen Seite der Elektrolyseschicht 8, d. h. im Bereich der als Kathode dienenden Elektrode 2, für die weitere Reaktion in der bevorzugten Brennstoff-Bereitstellungseinrichtung HS Palladium Pd und molekulares H₃O in Verbindung mit freien Elektronen e⁻ zur Verfügung. Es wird eine Palladium-Wasserstoff-Verbindung PdH und Wasser H₂O gebildet. Nach Anlegen einer Last R an die Elektroden 3, 4 der Brennstoffzelle FC bilden sich durch den Katalysator der Membran 5 aus Palladium Pd und Wasserstoff Protonen 2H⁺ und freie Elektronen 2e⁻. Die Protonen 2H⁺ treten durch die Membran zur als Kathode dienenden Elektrode 4, wobei aufgrund der katalytischen Wirkung in Verbindung mit zugeführtem Sauerstoff O₂ Wasser H₂O gebildet und in die Umgebungsluft abgegeben wird.

Der Aufbau ermöglicht eine besonders vorteilhafte Miniaturisierung dadurch, dass die Elektrolysezelle an der Rückseite des Palladiumspeichers angebracht wird, so dass der Palladiumspeicher von dort reversibel elektrochemisch mit Wasserstoff beladen werden kann.

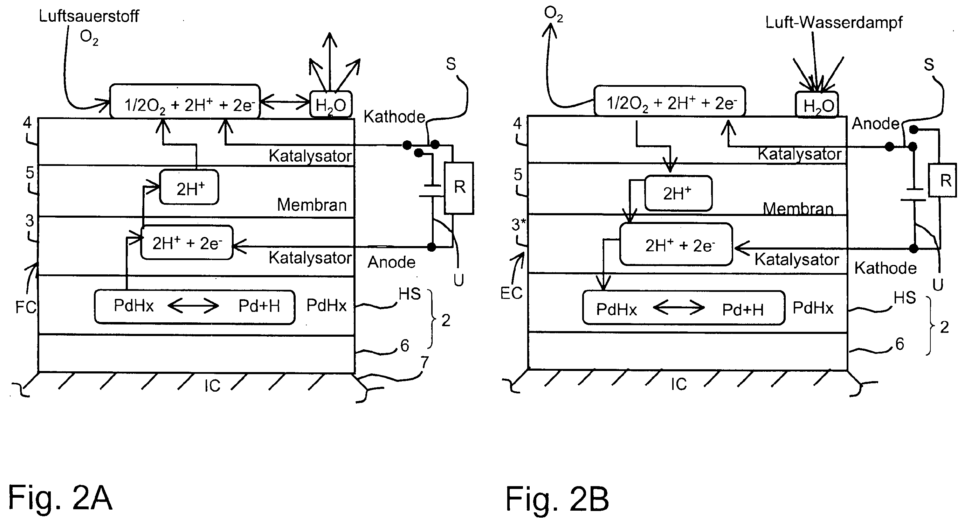

Fig. 2A, 2B zeigen eine weitere beispielhafte Brennstoffzellenanordnung gemäß dem zweiten Ausführungsbeispiel in zwei verschiedenen Beschaltungszuständen. Dargestellt ist wiederum eine Schichtanordnung aus zwei Elektroden 3, 4 mit einer katalytischen und zwischen diesen angeordneten Protonen durchlassenden Schicht bzw. Membran. Eine der Elektroden 4 steht mit der Umgebungsluft in Verbindung, so dass ein Austausch von Luftsauerstoff O₂ und Wasser H₂O mit der Umgebungsluft erfolgen kann. Die andere Elektrode 3 ist wiederum einer Brennstoff-Bereitstellungseinrichtung HS benachbart angeordnet, wobei diese Elektrode 3 und die Brennstoff-Bereitstellungseinrichtung HS auch als eine einzige Einheit ausgebildet werden können. Die dargestellte Brennstoff-Bereitstellungseinrichtung ist vorzugsweise ein Palladium- bzw. Palladiumhydridspeicher zum zeitweiligen Speichern des Brennstoffs .

Bei dem dargestellten Ausführungsbeispiel handelt es sich um einen Schichtaufbau, welcher direkt auf einer Siliziumschicht 6 aufgebracht ist. Die Brennstoff-Bereitstellungseinrichtung HS ist somit als eine Schicht auf oder als ein Bestandteil der Siliziumschicht 6 ausgebildet. Die Siliziumschicht 6 ist beispielsweise, wie dargestellt, zugleich Bestandteil einer integrierten Schaltungsanordnung IC, 7 oder ist auf einer solchen ausgebildet. Möglich ist auch eine Anordnung, bei welcher die Siliziumschicht 6 als Träger oder Bestandteil eines Trägers 2 in seitlicher Richtung breiter ausgebildet ist und seitlich neben der Brennstoffzellenanordnung eine Schaltung S oder eine integrierte Schaltungsanordnung trägt. Die Gesamtanordnung kann vorzugsweise mit zur Halbleiterfertigung für sich bekannten Verfahren hergestellt werden.

Fig. 2A zeigt einen ersten Schaltungszustand, bei welchem über die Schaltung S eine Last R an die beiden Elektroden 3, 4 angelegt wird. Die Gesamtanordnung dient somit als Brennstoffzelle FC, wobei der Brennstoff-Bereitstellungseinrichtung HS Brennstoff entnommen wird.

Fig. 2B stellt einen alternativen Schaltungszustand der Schaltung S dar. Anstelle der Last R werden die beiden Elektroden 3, 4 mit einer Spannungsquelle U verbunden. Die Polung erfolgt dabei so, dass nun die zuvor als Anode geschaltete Elektrode 3 als Kathode geschaltet wird. Entsprechend wird die zuvor als Kathode geschaltete Elektrode 4 als Anode geschaltet. Die anliegende Spannung bewirkt die Funktion der Anordnung als Elektrolysezelle EC. Während im ersten Schaltungszustand (Fig. 2A) Brennstoff aus der Brennstoff-Bereitstellungseinrichtung HS mit Luftsauerstoff O₂ zu Wasser H₂O als Verbrennungsendprodukt elektrochemisch umgesetzt wurde, erfolgt im zweiten Schaltungszustand (Fig. 2B) der umgekehrte elektrochemische Vorgang. Unter Verwendung von Wasser H₂O, beispielsweise Luft-Wasserdampf aus der Umgebung, werden Sauerstoff O₂, der in die Umgebungsluft abgegeben wird, und Wasserstoff , welcher der Brennstoff-Bereitstellungseinrichtung HS zugeführt wird, erzeugt.

Während bei dem Ausführungsbeispiel gemäß Fig. 1A an eine Polymerelektrolytmembran mit integriertem Palladiumhydridspeicher an der Rückseite einer Elektrolyt-Katalysator-Einheit angekoppelt wurde, um den Palladiumhydridspeicher als Kathode geschaltet elektrochemisch mit Wasserstoff zu beladen, wird gemäß dem zweiten Ausführungsbeispiel (Fig. 2A, Fig. 2B) eine Anordnung mit einer geringeren Schichtanzahl bevorzugt. Bei dem zweiten Ausführungsbeispiel dient die Polymerelektrolytmembran als Ionenleiter und Wasserspeicher. Beim elektrochemischen Aufladen des Palladiumhydridspeichers wird der Palladiumhydridspeicher als Kathode geschaltet. Zur reversiblen Wasserstoffbeladung muss die Polymermembran eine ausreichende Schichtdicke aufweisen.

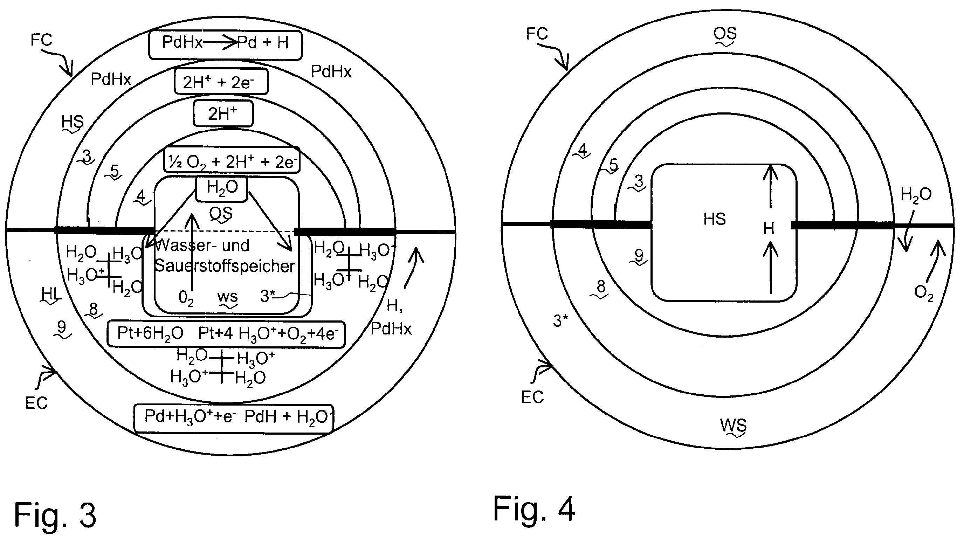

Fig. 3 zeigt ein drittes Ausführungsbeispiel einer Brennstoffzellenanordnung, welche ebenfalls sowohl die Funktion einer Brennstoffzelle FC als auch die Funktion einer Elektrolysezelle EC übernimmt. Neben der dargestellten und besonders bevorzugten zylindersymmetrischen Aufbauanordnung der beiden Hauptkomponenten sind auch anders geformte Anordnungen vorteilhaft umsetzbar. Diese besonders bevorzugte Brennstoffzellenanordnung dient in Art eines Brennstoffzellen-Akkumulators in Form herkömmlicher Standardbatterien. Vorteilhafterweise wird durch die Ausbildung mehrerer Speichereinrichtungen HS, OS, WS ein autarker Betrieb unabhängig von dem Austausch von Verbrennungsstoffen mit der Umgebung ermöglicht.

Bei der in Fig. 3 dargestellten Ausführungsform des dritten Ausführungsbeispiels weist die Brennstoffzellenanordnung eine zentrale Speichereinrichtung OS, WS auf.

Neben der Möglichkeit der Ausbildung einer einzigen Speichereinrichtung wird eine untergliederte oder in zwei Speichereinrichtungen OS, WS aufgegliederte Speichereinrichtung bevorzugt. Die erste dieser Speichereinrichtungen OS ist der Brennstoffzelle FC benachbart und bildet einen hydrophoben Bereich mit einem hydrophoben Material aus. Dies bewirkt, dass von der Brennstoffzelle FC abgegebenes Wasser H₂O beschleunigt in die benachbarte Speichereinrichtung WS abgeführt wird. Die benachbarte zweite Speichereinrichtung WS ist der Elektrolysezelle EC benachbart und speichert Wasser H₂O, welches der Elektrolysezelle EC für die Elektrolyse bereitgestellt wird.

Die Brennstoffzelle FC besteht von der zentralen Speichereinrichtung OS aus betrachtet wiederum aus einer zwischen zwei Elektroden 4, 3 aufgenommenen Protonen durchlassenden Schicht bzw. Membran 5, wobei die der zentralen Speichereinrichtung OS zugewandte Elektrode als Kathode und die andere Elektrode als Anode geschaltet wird. Außenseitig ist die Brennstoffzelle FC von einer Brennstoff-Bereitstellungseinrichtung HS umgeben, vorzugsweise wiederum einem Palladium bzw. Palladiumhydridspeicher, um Brennstoff bereitzustellen. Für die Funktion der Brennstoffzelle FC wird somit von außen her Brennstoff und von innen her der Reaktant O₂ bereitgestellt. In der zweiten Hälfte der Gesamtanordnung befindet sich die Elektrolysezelle EC, wobei die räumliche Anordnung und Untergliederung insbesondere mit Blick auf das räumliche Verhältnis auch anderweitig untergliedert werden kann. Die Elektrolysezelle EC besteht in üblicher Art und Weise aus einer zentralen Elektrode 3* der Elektrolyseeinheit 8 mit dem Elektrolyt und einer weiteren Elektrode 9, welche vorliegend durch einen Brennstoffleiter HL ausgebildet wird. Im Innenraum bzw. in der Speichereinrichtung WS bereitgestelltes Wasser H₂O als Elektrolyseausgangsprodukt wird durch das Anlegen einer Spannung an die beiden Elektroden 3*, 9 zu Sauerstoff O₂ und Brennstoff umgesetzt. Der Sauerstoff O₂ wird in den anderen Speicherbereich OS im Innenraum der Brennstoffzellenanordnung transportiert und steht dort für die Reaktion in der Brennstoffzelle SC zur Verfügung. Der erzeugte Brennstoff wird über den Brennstoffleiter HL zu der Brennstoff-Bereitstellungseinrichtung HS transportiert. Möglich ist auch eine Ausgestaltung der Brennstoff-Bereitstellungseinrichtung HS rundherum um die Brennstoffzelle FC und die Elektrolysezelle EC.

Vorteilhaft an diesem Aufbau ist, dass der derart ausgebildete Brennstoffzellen-Akkumulator als autarkes System betrieben werden kann. Im Gegensatz zu den beiden zuvor beschriebenen Ausführungsbeispielen wird die Brennstoffzelle nicht als selbstatmendes System aufgebaut, welches zur Wasserstoffverbrennung den Luftsauerstoff der Umgebung verwendet. Bei diesem besonders bevorzugten dritten Ausführungsbeispiel ist der zur Verbrennung benötigte Sauerstoff im Inneren der vorzugsweise zylinderförmig aufgebauten Anordnung gespeichert. Ist der Sauerstoff ganz oder teilweise verbraucht, wird die gesamte Anordnung elektrochemisch erneut aufgeladen. Dabei wird Wasser im Zylinderinneren von der Elektrolysezelle zu Wasserstoff und Sauerstoff zerlegt, wobei der Sauerstoff im Zylinderinneren gespeichert wird. Der Wasserstoff verteilt sich über Diffusion im Palladium der Brennstoff-Bereitstellungseinrichtung und wird der Brennstoffzelle zugeführt. Bei der Brennstoffzellenreaktion wird der gespeicherte Sauerstoff und Wasserstoff zu Wasser umgesetzt. Dieses Wasser wird in den Zylinderinnenraum abgeführt und kann beim Aufladen des Akkus wieder zu Sauerstoff und Wasserstoff zerlegt werden.

Bei dem besonders bevorzugten Aufbau werden die Komponenten der Brennstoffzelle und der Elektrolyt-Katalysator-Einheit innerhalb eines Palladiumrohres einander gegenüberliegend angeordnet. Es handelt sich somit um ein autarkes System, an welches zum Aufladen lediglich eine Spannung anzulegen ist, um bei Bedarf eine Spannung bzw. einen Strom abgreifen zu können. Im Gegensatz dazu beruhen die beiden ersten Ausführungsbeispiele auf einer Elektrolysezelle, die an einen Wassertank angeschlossen ist, wobei Wasser über Leitung zugeführt wird und sich durch Kapillarkräfte verteilt, oder die hygroskopisch ausgebildet ist und sich passiv aus der Luftfeuchtigkeit der Umgebung auflädt.

Die Methode der elektrochemischen Wasserstoffbeladung ermöglicht somit den Aufbau eines Brennstoffzellen-Akkumulators und eröffnet so das Potential, eine wiederaufladbare chipintegrierte Brennstoffzelle für kleine portable elektrische Geräte mit autarker Energieversorgung bereitzustellen. Vorteilhafterweise wird bei den beschriebenen Anordnungen in einem sauren Elektrolyten Palladium direkt als Kathode geschaltet, so dass der an der Oberfläche entstehende Wasserstoff absorbiert wird und sich durch Diffusion im Palladiumhydridspeicher verteilt. Der Elektrolyt wird so gewählt, dass Hydronium-Ionen und Wasser in ausreichend großer Menge und Beweglichkeit enthalten sind. Als Elektrolytmaterialien werden beispielsweise Hydrogele, weiter entwickelte Polymerelektrolytmembranen oder Säuren oder Laugen, die beispielsweise in hochporösen Keramiken gespeichert sind, verwendet.

Fig. 4 zeigt eine zweite Ausführungsform des dritten Ausführungsbeispiels. Der Aufbau ist im wesentlichen vom Grundprinzip her wie bei der zuvor beschriebenen Ausführungsform. Jedoch befinden sich im Umfangsbereich der Brennstoffzelle FC und der Elektrolysezelle EC die beiden Speichereinrichtungen OS, WS für den Sauerstoff als Reaktant bzw. das Wasser als E-lektrolyseausgangsprodukt. Im zentralen Innenraum befindet sich der Speicher für den als Brennstoff benutzten Wasserstoff. Entsprechend ist die Beschaltung der Elektroden 3, 4, 3*, 9 umgekehrt zu der Beschaltung der zuvor beschriebenen Ausführungsform. Vorteilhaft an dieser Ausführungsform ist, dass der Brennstoff zentral zugeführt und bereitgestellt wird und somit nach der Erzeugung in der Elektrolysezelle EC schnellstmöglich für die Brennstoffzelle FC verfügbar ist.

## Patentansprüche

1. Brennstoffzellenanordnung, die eine Brennstoffzelle (FC) mit
einer ersten Elektrode (3) und einer zweiten Elektrode (4), von denen eine als Kathode und die andere als Anode ausgebildet ist,
einer zumindest Protonen durchlassenden Schicht (5) mit katalytischer Wirkung oder zusätzlich einem katalytischen Material im Bereich zwischen der ersten Elektrode (3) und der zweiten Elektrode (4) einer Brennstoff-Bereitstellungseinrichtung (HS) zum Zuführen eines Brennstoffs, und
einer Reaktandbereitstellungseinrichtung zum Zuführen eines Reaktants (O₂), welches -zur Stromerzeugung mit Protonen aus dem Brennstoff reagiert, wobei Brennstoff-Bereitstellungseinrichtung und Reaktant-Bereitstellungseinrichtung auf der Seite der ersten Elektrode bzw. der Seite der zweiten Elektrode angeordnet sind, wobei
die Brennstoff-Bereitstellungseinrichtung (HS) als eine der Elektroden (3) ausgebildet ist oder die Brennstoff-Bereitstellungseinrichtung (HS) als eine einer der Elektroden (3) benachbarte Schicht ausgebildet ist und
die Brennstoff-Bereitstellungseinrichtung (HS) als Speichereinrichtung für den Brennstoff ausgebildet ist, wobei
die Brennstoff-Bereitstellungseinrichtung (HS) auf einer Halbleiterschicht angeordnet ist und in der Halbleiterschicht eine integrierte Schaltungsanordnung ausgebildet ist, wobei die Schaltungsanordnung mit Strom der Brennstoffzelle (FC) versorgt wird oder die die Schaltungsanordnung eine aktive Schaltung der Brennstoffzelle durchführt,
**dadurch gekennzeichnet, dass**
bei der eine Brennstoff-Zuführungseinrichtung (EC) vorgesehen ist, wobei die Brennstoff-Zuführungseinrichtung (EC) zum Zuführen des Brennstoffs mit der Brennstoff-Bereitstellungseinrichtung (HS) verbunden ist, und die Brennstoff-Zuführungseinrichtung (EC) und die Brennstoff-Bereitstellungseinrichtung (HS) zueinander benachbart angeordnet sind, und
die Brennstoff-Bereitstellungseinrichtung (HS) sowohl einerseits als eine der Elektroden (3) der Brennstoffzelle (FC) ausgebildet ist oder zu einer der Elektroden (3) der Brennstoffzelle (FC) direkt benachbart angeordnet ist als auch andererseits als eine Elektrode einer durch die Brennstoff-Zuführungseinrichtung ausgebildeten Elektrolysezelle (EC) ausgebildet ist oder zu einer Elektrode durch die Brennstoff-Zuführungseinrichtung (EC) ausgebildeten Elektrolysezelle (EC) direkt benachbart angeordnet ist.

2. Brennstoffzellenanordnung nach Anspruch 1, bei der die Speichereinrichtungen (OS, WS) für das Reaktant (O₂) und das Verbrennungsendprodukt (H₂O) zum Austausch und Durchleiten des Reaktants und des Verbrennungsendprodukts als gemeinsames Behältnis miteinander verbunden sind.

3. Brennstoffzellenanordnung nach Anspruch 1 oder Anspruch 2 mit integrierten Speichereinrichtungen (WS, HS, OS) für ein Verbrennungsprodukt (H₂O), den Brennstoff (H) und das Reaktant (O₂) als geschlossenes System.

4. Brennstoffzellenanordnung nach einem der Ansprüche 1 bis 3, bei der die Speichereinrichtung (OS) für das Reaktant (O₂) der einen der Elektroden (4) der Brennstoffzelle (FC) benachbart angeordnet ist und die Speichereinrichtung (WS) für das Verbrennungsendprodukt (H₂O) einer Elektrode (3*) einer Elektrolyseeinheit (EC) benachbart angeordnet ist.

5. Brennstoffzellenanordnung nach einem der Ansprüche 1 bis 3, bei der die Speichereinrichtung (OS) für das Reaktant (O₂) ein hydrophobes Material aufweist und/oder die Speichereinrichtung (WS) für das Verbrennungsendprodukt (H₂O) ein hydrophiles Material aufweist.

6. Brennstoffzellenanordnung nach einem der Ansprüche 1 bis 3, bei der die Speichereinrichtung (HS) für den Brennstoff zwischen der Protonen durch-lassenden Schicht (5) der Brennstoffzelle (FC) und einer Elektrolytschicht (8) einer Elektrolyseeinheit (EC) angeordnet ist und die beiden anderen Speichereinrichtungen (OS, WS) die Brennstoffzelle (FC) und die Elektrolyseeinheit (EC) umgebend angeordnet sind.

7. Brennstoffzellenanordnung nach einem der Ansprüche 1 bis 4, bei der die Speichereinrichtungen (OS, WS) für das Reaktant (O₂) und das Verbrennungsendprodukt (H₂O) zwischen der Protonen durchlassenden Schicht (5) der Brennstoffzelle (FC) und einer Elektrolytschicht (8) einer Elektrolyseeinheit (EC) angeordnet sind und die andere Speichereinrichtung (HS) die Brennstoffzelle (FC) und die Elektrolyseeinheit (EC) umgebend angeordnet ist.

8. Brennstoffzellenanordnung nach einem vorstehenden Anspruch, wobei die Gesamtanordnung im Wesentlichen zylindersymmetrisch aufgebaut ist.

9. Brennstoffzellenanordnung nach Anspruch 1, mit einer Schaltung (S) zum wahlweisen elektrochemischen Entladen oder Aufladen der Brennstoff-Bereitstellungseinrichtung (HS), wobei die Brennstoffzuführungseinrichtung (EC) durch umgekehrtes Beschalten der Brennstoffzelle (FC) durch die Schaltung (S) zum Aufladen der Brennstoff-Bereitstellungseinrichtung (HS) derart ausgebildet wird, dass die Brennstoff-Bereitstellungseinrichtung (HS) oder eine dieser benachbarte der Elektroden (3*) als Kathode geschaltet wird.

10. Brennstoffzellenanordnung nach einem der Ansprüche 1 bis 9, bei der die Brennstoff-Zuführungseinrichtung (EC) eine Elektrolyseeinheit (8) einer Elektrolysezelle zum Erzeugen des Brennstoffs aufweist.

11. Brennstoffzellenanordnung nach einem vorstehenden Anspruch, bei der die Brennstoff-Bereitstellungseinrichtung (HS) aus einem kontaktierten Material besteht, welches mit dem Brennstoff beaufschlagt ist.

12. Brennstoffzellenanordnung nach einem vorstehenden Anspruch, bei der die Brennstoff-Bereitstellungseinrichtung (HS) Palladium (Pd) aufweist und als Palladium-Speicher, insbesondere als Palladiumhydridspeicher, ausgebildet ist.

13. Brennstoffzellenanordnung nach einem vorstehenden Anspruch, bei der die Brennstoff-Bereitstellungseinrichtung (HS) zum autonomen Betreiben einer integrierten Schaltung (IC) dimensioniert ist, insbesondere eine Größe von 10 cm x 10 cm x 2 cm oder besonders bevorzugt 1 cm x 1 cm x 0,2 cm aufweist.

14. Brennstoffzellenanordnung nach einem der Ansprüche 2, 4, 8, oder 9 - 12, bei der die Brennstoff-Zuführungseinrichtung (EC) ein Depot mit Algen oder Bakterien zum Erzeugen des Brennstoffs (H) aufweist.

15. Energiebereitstellungseinrichtung mit einer Brennstoffzellenanordnung nach einem der Ansprüche 1-14 zum Bereitstellen geringer Strommengen mit einer gering begrenzten Menge des Brennstoffs.

16. Energiebereitstellungseinrichtung mit einer Brennstoffzellenanordnung nach einem der Ansprüche 1-14 zum Bereitstellen geringer Strommengen mit einer begrenzten und autark nachfüllbaren Menge des Brennstoffs.

17. Elektrische Schaltung (ES) mit einer Brennstoffzellenanordnung nach einem der Ansprüche 1-14 zum autarken Versorgen der elektrischen Schaltung mit Strom.

18. Integrierte Schaltungsanordnung (IC) mit
- einer Seite der IC-Fläche, insbesondere einer fertigprozessierten Seite der IC-Fläche und
- einer Brennstoffzellenanordnung nach einem der Ansprüche 1-14
wobei die Brennstoff-Bereitstellungseinrichtung (HS) Palladium (Pd) aufweist und als Palladium-Speicher, insbesondere als Palladiumhydridspeicher auf der Seite oder fertigprozessierten Seite der IC-Fläche aufgebracht ist.

19. Verfahren zum Herstellen einer Brennstoffzellenanordnung nach einem der Ansprüche 1 bis 14, bei dem die Brennstoffzelle (FC) und die Brennstoff-Zuführungseinrichtung (EC) mit einem integrierten Palladiumspeicher hergestellt werden.

## Claims

1. Fuel cell arrangement, which comprises a fuel cell (FC) with
a first electrode (3) and a second electrode (4), of which one is constructed as cathode and the other as anode,
a layer (5), which lets through at least protons, with catalytic action or additionally a catalytic material in the region between the first electrode (3) and the second electrode (4), a fuel preparation device (HS) for supplying a fuel cell, and
a reactant preparation device for supplying a reactant (O₂) which reacts with protons from the fuel in order to generate current, wherein the fuel preparation device and reactant preparation device are arranged on the side of the first electrode or the side of the second electrode, wherein
the fuel preparation device (HS) is constructed as one of the electrodes (3) or the fuel preparation device (HS) is constructed as a layer adjacent to one of the electrodes (3) and the fuel preparation device (HS) is constructed as a storage device for the fuel, wherein the fuel preparation device (HS) is arranged on a semiconductor layer and an integrated circuit arrangement is formed in the semiconductor layer, wherein the circuit arrangement is supplied with current of the fuel cell (FC) or the circuit arrangement performs active switching of the fuel cell,
**characterised in that**
a fuel supply device (EC) is provided therein, wherein the fuel supply device (EC) is, for supply of the fuel, connected with the fuel preparation device (HS), and the fuel supply device (EC) and the fuel preparation device (HS) are arranged adjacent to one another, and
the fuel preparation device (HS) on the one hand is constructed as one of the electrodes (3) of the fuel cell (FC) or arranged directly adjacent to one of the electrodes (3) of the fuel cell (FC) and on the other hand is constructed as an electrode of an electrolysis cell (EC) formed by the fuel supply device or is arranged directly adjacent to an electrode of an electrolysis cell (EC) formed by the fuel supply device (EC).

2. Fuel cell arrangement according to claim 1, in which the storage device (OS, WS) for the reactant (O₂) and the combustion end product (H₂O) are, for exchange and conducting through the reactant and the combustion end product, connected together to form a common container.

3. Fuel cell arrangement according to claim 1 or claim 2 with integrated storage devices (WS, HS, OS) for a combustion product (H₂O), the fuel (H) and the reactant (O₂) as a closed system.

4. Fuel cell arrangement according to any one of claims 1 to 3, in which the storage device (OS) for the reactant (O₂) is arranged adjacent to the one of the electrodes (4) of the fuel cell (FC) and the storage device (WS) for the combustion end product (H₂O) is arranged adjacent to an electrode (3*) of an electrolysis unit (EC).

5. Fuel cell arrangement according to any one of claims 1 to 3, in which the storage device (OS) for the reactant (O₂) comprises a hydrophobic material and/or the storage device (WS) for the combustion end product (H₂O) comprises a hydrophilic material.

6. Fuel cell arrangement according to any one of claims 1 to 3, in which the storage device (HS) for the fuel is arranged between the layer (5), which lets through protons, of the fuel cell (FC) and an electrolytic layer (8) of an electrolysis unit (EC) and the other two storage devices (OS, WS) are arranged to surround the fuel cell (FC) and the electrolysis unit (EC).

7. Fuel cell arrangement according to any one of claims 1 to 4, in which the storage devices (OS, WS) for the reactant (O₂) and the combustion end product (H₂O) are arranged between the layer (5), which lets through the protons, of the fuel cell (FC) and an electrolytic layer (8) of an electrolysis unit (EC) and the other storage device (HS) is arranged to surround the fuel cell (FC) and the electrolysis unit (EC).

8. Fuel cell arrangement according to any one of the preceding claims, wherein the entire arrangement is of substantially cylindrically symmetrical construction.

9. Fuel cell arrangement according to claim 1, with a circuit (S) for selectable electrochemical discharging or charging of the fuel preparation device (HS), wherein the fuel supply device (EC) is constructed in such a manner that through reversed connection of the fuel cell (FC) by the circuit (S) for charging the fuel preparation device (HS), the fuel preparation device (HS) or an electrode (3*) adjacent to this is connected as cathode.

10. Fuel cell arrangement according to any one of claims 1 to 9, in which the fuel supply device (EC) comprises an electrolysis unit (8) of an electrolysis cell for producing the fuel.

11. Fuel cell arrangement according to any one of the preceding claims, in which the fuel preparation device (HS) consists of a contacted material acted on by the fuel.

12. Fuel cell arrangement according to any one of the preceding claims, in which the fuel preparation device (HS) comprises palladium (Pd) and is constructed as a palladium store, particularly as a palladium hydride store.

13. Fuel cell arrangement according to any one of the preceding claims, in which the fuel preparation device (HS) is dimensioned for autonomous operation of an integrated circuit (IC), particularly has a size of 10 centimetres x 10 centimetres x 2 centimetres or particularly preferably 1 centimetres x 1 centimetre x 0.2 centimetres.

14. Fuel cell arrangement according to any one of claims 2, 4, 8, 9, 10, 11 and 12, in which the fuel supply arrangement (EC) comprises a depot with algae or bacteria for producing the fuel (H).

15. Energy preparation device with a fuel cell arrangement according to any one of claims 1 to 14 for providing small amounts of current by a small and limited amount of fuel.

16. Energy preparation device with a fuel cell arrangement according to any one of claims 1 to 14 for providing small amounts of current by a limited and autonomously replenishable amount of fuel.

17. Electric circuit (ES) with a fuel cell arrangement according to any one of claims 1 to 14 for autonomous supply of the electrical circuit with current.

18. Integrated circuit arrangement (IC) with
- one side of the IC surface, particularly a side of the IC surface processed to finished state, and
- a fuel cell arrangement according to any one of claims 1 to 14,
wherein the fuel preparation device (HS) comprises palladium (Pd) and is mounted as a palladium store, particularly as a palladium hydride store, on the side of the IC surface or the side, which is processed to finished state, of the IC surface.

19. Method of producing a fuel cell arrangement according to any one of claims 1 to 14, in which the fuel cell (FC) and the fuel supply device (EC) are produced with an integrated palladium store.

## Revendications

1. Système de piles à combustible, qui comprend une pile à combustible (FC) avec une première électrode (3) et une deuxième électrode (4), dont l'une est réalisée en cathode et l'autre est réalisée en anode,
avec une couche (5) perméable au moins aux protons avec une action catalytique ou avec en plus un matériau catalytique dans la région située entre la première électrode (3) et la deuxième électrode (4),
avec un dispositif de préparation de combustible (HS) pour la fourniture d'un combustible, et
avec un dispositif de préparation de réactif pour la fourniture d'un réactif (O₂) qui réagit avec des protons provenant du combustible pour produire du courant, dans lequel le dispositif de préparation de combustible et le dispositif de préparation de réactif sont disposés sur le côté de la première électrode ou sur le côté de la deuxième électrode,
dans lequel le dispositif de préparation de combustible (HS) est réalisé comme une des électrodes (3) ou le dispositif de préparation de combustible (HS) est réalisé comme une couche voisine d'une des électrodes (3), et
le dispositif de préparation de combustible (HS) est réalisé comme dispositif de stockage pour le combustible,
dans lequel le dispositif de préparation de combustible (HS) est disposé sur une couche semi-conductrice et un système de circuit intégré est disposé dans la couche semi-conductrice, dans lequel le système de circuit est alimenté avec du courant de la pile à combustible (FC) ou le système de circuit réalise un circuit actif de la pile à combustible,
**caractérisé en ce qu'**il est prévu dans ledit système un dispositif de fourniture de combustible (EC), dans lequel le dispositif de fourniture de combustible (EC) est relié au dispositif de préparation de combustible (HS) pour la fourniture du combustible et le dispositif de fourniture de combustible (EC) et le dispositif de préparation de combustible (HS) sont disposés à proximité l'un de l'autre, et
le dispositif de préparation de combustible (HS) est aussi bien d'une part réalisé comme une des électrodes (3) de la pile à combustible (FC) ou disposé à proximité immédiate d'une des électrodes (3) de la pile à combustible (FC) que d'autre part réalisé comme une électrode d'une cellule d'électrolyse (EC) formée par le dispositif de fourniture de combustible ou disposé à proximité immédiate d'une électrode d'une cellule d'électrolyse (EC) formée par le dispositif de fourniture de combustible (EC).

2. Système de piles à combustible selon la revendication 1, dans lequel les dispositifs de stockage (OS, WS) pour le réactif (O₂) et le produit final de combustion (H₂O) sont reliés l'un à l'autre en un réservoir commun pour l'échange et le transfert du réactif et du produit final de combustion.

3. Système de piles à combustible selon la revendication 1 ou la revendication 2, avec des systèmes de stockage intégrés (WS, HS, OS) pour un produit de combustion (H20), le combustible (H) et le réactif (02) sous forme de système fermé.

4. Système de piles à combustible selon l'une quelconque des revendications 1 à 3, dans lequel le système de stockage (OS) pour le réactif (02) est disposé à proximité de l'une des électrodes (4) de la pile à combustible (FC) et le système de stockage (WS) pour le produit final de combustion (H20) est disposé à proximité d'une électrode (3*) d'une unité d'électrolyse (EC).

5. Système de piles à combustible selon l'une quelconque des revendications 1 à 3, dans lequel le système de stockage (OS) pour le réactif (O₂) présente un matériau hydrophobe et/ou le système de stockage (WS) pour le produit final de combustion (H₂O) présente un matériau hydrophile.

6. Système de piles à combustible selon l'une quelconque des revendications 1 à 3, dans lequel le système de stockage (HS) pour le combustible est disposé entre la couche perméable aux protons (5) de la pile à combustible (FC) et une couche d'électrolyte (8) d'une unité d'électrolyse (EC) et les deux autres systèmes de stockage (OS, WS) sont disposés de façon à entourer la pile à combustible (FC) et l'unité d'électrolyse (EC).

7. Système de piles à combustible selon l'une quelconque des revendications 1 à 4, dans lequel les systèmes de stockage (OS, WS) pour le réactif (O₂) et le produit final de combustion (H₂O) sont disposés entre la couche perméable aux protons (5) de la pile à combustible (FC) et une couche d'électrolyte (8) d'une unité d'électrolyse (EC) et l'autre système de stockage (HS) est disposé de façon à entourer la pile à combustible (FC) et l'unité d'électrolyse (EC).

8. Système de piles à combustible selon une revendication précédente, dans lequel le système total est construit avec la symétrie essentiellement cylindrique.

9. Système de piles à combustible selon la revendication 1, avec un circuit (S) destiné, au choix, à la décharge ou à la charge électrochimique du dispositif de préparation de combustible (HS), dans lequel le dispositif de fourniture de combustible (EC) est réalisé par connexion inversée de la pile à combustible (FC) par le circuit (S) pour la charge du dispositif de préparation de combustible (HS), de telle manière que le dispositif de préparation de combustible (HS) ou une des électrodes (3*) voisine de celui-ci soit connecté(e) comme cathode.

10. Système de piles à combustible selon l'une quelconque des revendications 1 à 9, dans lequel le dispositif de fourniture de combustible (EC) présente une unité d'électrolyse (8) d'une cellule d'électrolyse pour la production du combustible.

11. Système de piles à combustible selon une revendication précédente, dans lequel le dispositif de préparation de combustible (HS) se compose d'un matériau mis en contact qui est exposé au combustible.

12. Système de piles à combustible selon une revendication précédente, dans lequel le dispositif de préparation de combustible (HS) présente du palladium et est réalisé sous forme d'accumulateur au palladium, en particulier d'accumulateur à l'hydrure de palladium.

13. Système de piles à combustible selon une revendication précédente, dans lequel le dispositif de préparation de combustible (HS) est dimensionné en vue du fonctionnement autonome d'un circuit intégré (IC) et présente en particulier une taille de 10 cm x 10 cm x 2 cm ou notamment de préférence de 1 cm x 1 cm x 0,2 cm.

14. Système de piles à combustible selon l'une quelconque des revendications 2, 4, 8, ou 9 - 12, dans lequel le dispositif de fourniture de combustible (EC) présente un dépôt avec des algues ou des bactéries pour la production du combustible (H).

15. Système de production d'énergie avec un système de piles à combustible selon l'une quelconque des revendications 1 à 14, pour la production de petites quantités de courant avec une petite quantité limitée du combustible.

16. Système de production d'énergie avec un système de piles à combustible selon l'une quelconque des revendications 1 à 14, pour la production de petites quantités de courant avec une quantité limitée et rechargeable de manière autarcique du combustible.

17. Circuit électrique (ES) avec un système de piles à combustible selon l'une quelconque des revendications 1 à 14, pour l'alimentation autarcique du circuit électrique avec du courant.

18. Système de circuit intégré (IC) avec
- un côté de la surface IC, en particulier un côté entièrement traité de la surface IC et
- un système de piles à combustible selon l'une quelconque des revendications 1 à 14,
dans lequel le dispositif de préparation de combustible (HS) présente du palladium (Pd) et est déposé sous forme d'accumulateur au palladium, en particulier d'accumulateur à l'hydrure de palladium, sur le côté ou le côté entièrement traité de la surface IC.

19. Procédé pour fabriquer un système de piles à combustible selon l'une quelconque des revendications 1 à 14, dans lequel la pile à combustible (FC) et le dispositif de fourniture de combustible (EC) sont fabriqués avec un accumulateur au palladium intégré.
